**Europäisches Patentamt**

**European Patent Office**

**Office européen des brevets**

(11) Veröffentlichungsnummer: **0 132 599**
**A1**

(12) # EUROPÄISCHE PATENTANMELDUNG

(21) Anmeldenummer: 84107227.5

(22) Anmeldetag: 23.06.84

(51) Int. Cl.⁴: **B 23 H 7/26**
**B 23 Q 3/157**

(30) Priorität: 06.07.83 CH 3702/83

(43) Veröffentlichungstag der Anmeldung:
13.02.85 Patentblatt 85/7

(84) Benannte Vertragsstaaten:
AT BE CH DE FR GB IT LI LU NL SE

(71) Anmelder: Erowa AG
Winkelstrasse 8
CH-5734 Reinach(CH)

(72) Erfinder: Schneider, Rudolf
Gondiswinkel
CH-5734 Reinach(CH)

(74) Vertreter: Rottmann, Maximilian R.
Hug Interlizenz AG Alte Zürcherstrasse 49
CH-8903 Birmensdorf/ZH(CH)

(54) **Werkzeugmagazin mit Werkzeug-Wechselvorrichtung.**

(57) Ein Werkzeugmagazin mit Wechselvorrichtung umfasst einen eigentlichen Magazinteil (1) mit einer Mehrzahl von drehbar auf einer Welle (3) gelagerten, scheibenförmigen Werkzeugträgern (6), die peripher angeordnete Werkzeuge (9) aufnehmen. Der Magazinteil als Ganzes ist zudem entlang der Welle (3) in der Höhe verstellbar. Zwischen den einzelnen Werkzeugträgern (6) sind Abtropfplatten (7) vorgesehen, die eine Verschmutzung der eingelagerten Werkzeuge (9) verhindern.

Weiter ist eine Wechselvorrichtung (2) mit einer Säule (10) und einem drauf verschiebbar gelagerten Schlitten (11) versehen, der einen schwenkbar gelagerten Transportarm (13) trägt. Am Ende des Transportarms (13) ist eine Greifvorrichtung angebracht. Durch Verschwenken des Transportarmes (13) und gegebenfalls Längsverschieben des Schlittens (11) sowie durch Verdrehen der Welle (3) und gegebenfalls Verstellen des Magazinteils (1) in der Höhe kann jedes im Magazin enthaltene Werkzeug (9) von der Greifvorrichtung erfasst und einer benachbart angeordneten Werkzeugmaschine zugeführt bzw. von der Werkzeugmaschine entnommen und in das Magazin zurückgelegt werden.

FIG 1

## Werkzeugmagazin mit Werkzeug-Wechselvorrichtung

------------------------------------------------------------

Die vorliegende Erfindung bezieht sich auf ein Werkzeugmagazin mit Werkzeug-Wechselvorrichtung zur Entnahme eines Werkzeugs aus dem Magazin und zum Transport des Werkzeugs in eine Werkstück-Bearbeitungsvorrichtung bzw. zur Entnahme des Werkzeugs aus der Werkstück-Bearbeitungsvorrichung und zum Transport des Werkzeugs in das Magazin, insbesondere für den Wechsel von Elektroden an elektroerosiven Bearbeitungseinrichtungen, mit zumindest einem drehbaren, im wesentlichen scheibenförmigen Werkzeugträger und einem schwenkbar gelagerten Transportarm zur Entnahme der Werkzeuge aus dem Werkzeugträger.

Im besonderen betrifft die Erfindung eine Einrichtung, die geeignet sein soll, Elektroden einer elektroerosiven Bearbeitungseinrichtung von einem Magazin zu holen und in die Einrichtung einzusetzen bzw. aus der Einrichtung zu entfernen und in das Magazin zurückzutransportieren.

Bei manchen Bearbeitungsvorgängen an ein und demselben Werkstück ist es erforderlich, im Lauf der Bearbeitung das Werkzeug der Bearbeitungseinrichtung mehrmahls zu wechseln, insbesondere, wenn die Steuerung der Bearbeitungseinrichtung mehr oder weniger automatisch erfolgt und somit in der Lage ist, eine Vielzahl von nacheinander ablaufenden Bearbeitungsvorgängen an ein und demselben Werkstück auszuführen. Um diesen selbsttätig ablaufenden Bearbei-

- 2 -

tungsvorgang nicht zu stören bzw. nicht zu unterbrechen, sind selbsttätig arbeitende Werkzeugwechselvorrichtungen bekannt, die ebenfalls vom Maschinenprogramm gesteuert werden.

Beispielsweise bei elektroerosiven Bearbeitungsvorrichtungen sind Elektrodenwechsler bekannt, bei denen ein endlos umlaufendes, in der Art einer Kette ausgebildetes Elektrodenmagazin vorgesehen ist. Ein Greifarm hat die Aufgabe, eine ausgewählte Elektrode zu erfassen und in die Bearbeitungsvorrichtung einzusetzen bzw. eine Elektrode aus der Bearbeitungsvorrichtung zu entfernen und in das Magazin zurückzulegen. Damit bei der Entnahme aus dem Magazin die richtige Elektrode erfasst wird bzw. dass bei der Ablage in das Magazin die Elektrode an einen vorbestimmten Platz abgelegt wird, muss ein derartiges Umlaufmagazin solange angetrieben werden, bis sich die ausgewählte Elektrode bzw. der vorbestimmte Ablageplatz im Bereich des Greifarmes befindet.

Ein Nachteil dieser bekannten Vorrichtungen ist zunächst darin zu erblicken, dass diese unverhältnismässig viel Raum beanspruchen. Weiter ist als nachteilig zu werten, dass die Zugriffszeit zu einem ausgewählten Werkzeug bzw. zu einem vorbestimmten Speicherplatz unter Umständen sehr lang sein kann, insbesondere dann, wenn das Magazin eine Vielzahl von Werkzeuglagerplätzen aufweist. Gerade bei elektroerosiven Bearbeitungeinrichtungen ist es unter Umständen erforderlich, dreissig, vierzig oder noch mehr Elektroden im Magazin vorzusehen, die im Lauf der Bearbeitung eines bestimmten Werkstückes benötigt werden könnten. Deshalb ist es im Sinne einer rationellen Arbeitsweise höchst wünschenswert, die Zugriffszeit möglichst kurz zu halten. Schliesslich sei als weiterer Nachteil erwähnt, dass die Elektroden einer elektroerosiven Bearbeitungsvorrichtung bei einem konventionellen Umlaufmagazin bezüglich ihrer Lage verschwenkt werden. Da diese Elektroden nach erfolgter Bearbeitung nass sind, hat dies zur Folge, dass die an den Elektroden noch anhaftende Flüssigkeit bei einer Umkehrung der Elektroden unkontrolliert auch über den Einspannbereich derselben läuft und diesen verschmutzen kann, so dass eine neuerliche Einspannung der Elektrode mit der gewünschten Präzision unter Umständen nicht mehr gewährleistet ist.

Es ist die Aufgabe der vorliegenden Erfindung, die vorstehend erwähnten Nachteile zu eliminieren und ein Werkzeugmagazin mit Werkzeug-Wechselvorrichtung der eingangs erwähnten Art zu schaffen, das sich insbesondere durch geringen Raumbedarf, kurze Zugriffszeit zu einem vorbestimmten Werkzeug bzw. zu einem vorbestimmten Speicherplatz, durch einfache Konstruktion und durch grosse Zuverlässigkeit im Betrieb auszeichnet, insbesondere auch dank Vermeidung der Tatsache, dass der Einspannbereich der Werkzeuge einer Verschmutzung z.B. durch abtropfende Bearbeitungsflüssigkeit ausgesetzt ist.

Gemäss der Erfindung wird dies dadurch erreicht, dass das Werkzeugmagazin eine Mehrzahl von um eine erste Achse drehbaren, im wesentlichen scheibenförmigen Werkzeugträgern umfasst, entlang deren Peripherie eine Mehrzahl von Werkzeug-Aufnahmeorganen angeordnet ist, und dass der Transportarm im wesentlichen L-förmig ausgebildet und einerends um eine im Abstand von der ersten Drehachse angeordnete, zweite Achse schwenkbar gelagert ist und andernends ein Endstück zum Ergreifen eines Werkzeugs trägt, wobei das Endstück des L-förmigen Transportarmes in Bezug auf dessen Schwenkachse transversal verschiebbar ist.

Vorzugsweise sind die scheibenförmigen Werkzeugträger im Abstand entlang einer drehbar gelagerten, sich im wesentlichen in vertikaler Richtung erstreckenden Welle angeordnet. Diese Anordnung hat den Vorteil, dass jeder einzelne der scheibenförmigen Werkzeugträger nur mit relativ wenigen, vorzugsweise etwa mit zehn Werkzeugen versehen ist, so dass jeder einzelne Werkzeugträger relativ schnell in die gewünschte Position verdreht werden kann, bei welcher das angewählte Werkzeug bzw. der ausgewählt Speicherplatz im Bereich des Transportarmes liegt. In diesem Fall ist es angezeigt, die Werkzeugträger zudem entlang der erwähnten, drehbaren Welle in horizontaler Richtung verschiebbar auszubilden um den Zugriff zu den einzelnen Werkzeugträgern zu erleichtern.

Unterhalb der scheibenförmigen Werkzeugträger ist vorzugsweise je eine im wesentlichen ebenfalls scheibenförmige Abtropfplatte angeordnet, deren Durchmesser zumindest annähernd demjenigen der Werkzeugträger entspricht und die somit verhindert, dass von höher gelegenen Werkzeugen Bearbeitungsflüssigkeit auf die im Magazin darunterliegend gelagerten Werkzeuge abtropfen kann.

Die entlang der Peripherie des Werkzeugträgers bzw. der Werkzeugträger angeordneten Werkzeug-Aufnahmeorgane können durch arretierbare Klemmorgane gebildet sein, deren Entnahme- bzw. Aufnahmeöffnung sich bezüglich der ersten Drehachse in radialer Richtung erstreckt. Dadurch ist ein einfaches, eine zwangsläufige Positionierung der Werkzeuge gewährleistendes Halteorgan geschaffen, aus dem das einzelne Werkzeug mittels eins Transportarmes leicht entnommen werden kann bzw. in welches ein abzulegendes Werkzeug leicht eingesetzt werden kann. Der L-förmige Transportarm ist mit Vorteil an einem Schlitten schwenkbar befestigt, welcher entlang einer im Abstand zur Drehachse zum Magazin angeordneten, sich im wesentlichen in vertikaler Richtung erstreckenden Säule verschiebbar und höhenverstellbar gelagert ist. Dadurch ergibt sich die Möglichkeit, nicht nur die scheibenförmigen Werkzeugträger, sondern auch den Transportarm in der Höhe zu verstellen, wodurch sich beim Anfahren einer vorbestimmten Werkzeug-Entnahme bzw. Werkzeug-Ablageposition eine bedeutende Zeitersparnis ergibt. Mit anderen Worten heisst das, dass drei unabhängig voneinander optimal steuerbare Bewegungsabläufe so optimiert werden können, dass der ausgewählte Platz im Werkzeugmagazin in der kürzest möglichen Zeit angefahren werden kann:

- Zum ersten werden die Werkzeugträger so um ihre Drehachse verschwenkt, dass der ausgewählte Magazinplatz im Bereich des Tragarmes liegt.

- Zum zweiten werden die Werkzeugträger so entlang ihrer Drehachse verschoben, dass derjenige Werkzeugträger im Bereich des Tragarmes liegt, welcher das gewünschte Werkzeug bzw. den vorgegebenen Speicherplatz enthält.

- Zum dritten kann dieser linearen Höhenverstellung der
  Werkzeugträger dadurch entgegengekommen werden, dass
  der Tragarm in zweckentsprechende Richtung ebenfalls
  höhenverstellt wird.

Diese drei Bewegungen können unabhänig voneinander und gleichzeitig ausgeführt werden; die Ausbildung einer zweckmässigen, optimierten Bewegungssteuerung dürfte im Ermessen des mit der Materie vertrauten Fachmannes liegen, so dass an dieser Stelle nicht weiter darauf eingegangen werden muss.

Die Länge des Schenkels des Transportarmes, der endseitig schwenkbar am Schlitten gelagert ist, entspricht zumindest annähernd der Distanz zwischen der horizontalen Säule, die den Schlitten aufnimmt, und der die scheibenförmigen Werkzeugträger aufnehmenden Welle. Der das Endstück tragende Schenkel des L-förmigen Transportarmes ist mit Vorteil teleskopartig ein- und ausfahrbar ausgebildet, um gegen das Werkzeug verfahren werden zu können, wobei das Endstück als zangenförmiges Greiforgan ausgebildet sein kann, dessen Backen zwischen einer auseinandergespreizten Freigabestellung und einer Klemmstellung betätigbar sind.

Im folgenden wird ein Ausführungsbeispiel des erfindungsgemässen Werkzeugmagazins, unter Bezugnahme auf die beiliegenden Zeichnungen, näher erläutert. Im einzelnen zeigen:

Fig. 1             eine schematische Skizze eines Werkzeugmagazins gemäss der Erfindung in
                   einer Seitenansicht,

Fig. 2             eine schematische Skizze des Werkzeugmagazins von Fig. 1 in einer Ansicht
                   von oben, und

Fig. 3 - 7         schematische Ansichten einer Ausführungsform eines Werkzeugmagazins von oben, in
                   verschiedenen Bewegungsphasen.

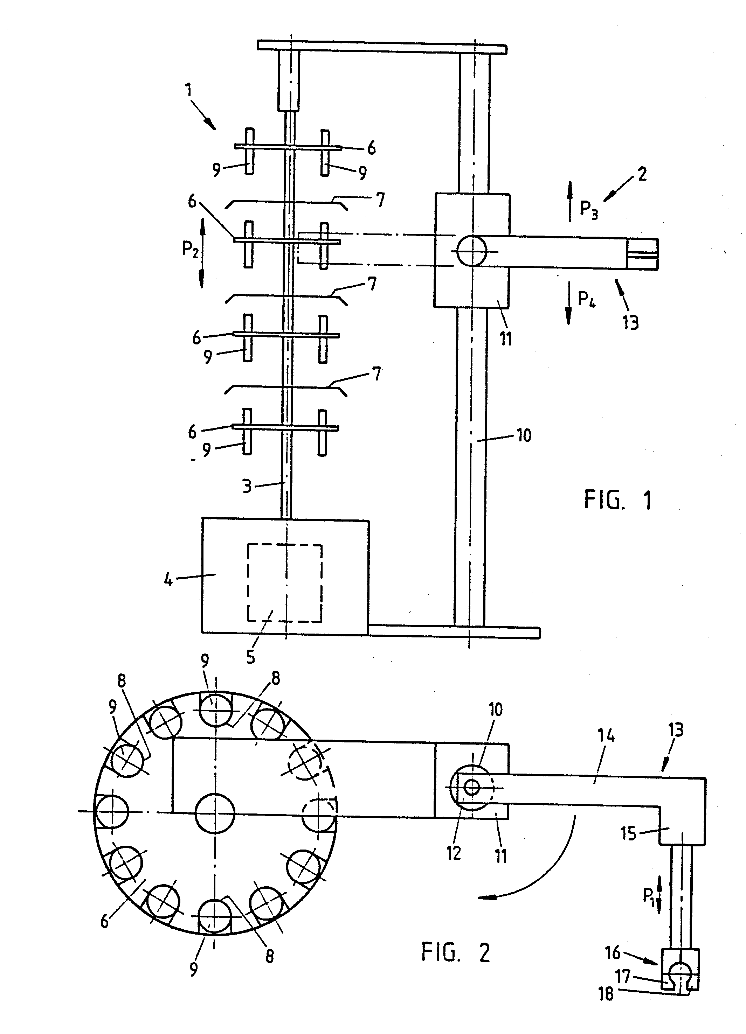

Das Werkzeugmagazin gemäss Fig. 1 und 2 umfasst den eigentlichen
Magazinteil, der gesamthaft mit 1 bezeichnet ist, sowie einen den
Transportarm umfassenden Teil, der gesamthaft mit 2 bezeichnet
ist. Der Magazinteil 1 besitzt eine Säule 3, die sich im wesentlichen in vertikaler Richtung erstreckt und die in einem Sockel
4 gelagert ist, der schematisch gestrichelte Antriebsmittel 5
einerseits zur Rotation der Säule 3 und andererseits zu deren
Längsverschiebung beinhaltet. Die Säule 3 trägt eine Mehrzahl von
Werkzeugträgern 6, im vorliegenden Beispiel vier, die im Abstand
übereinander an der Säule 3 angeordnet sind. Zwischen den einzelnen Werkzeugträgern 6 sind Abtropfplatten 7 vorgesehen, deren
Zweck im folgenden noch näher erläutert wird.

Wie insbesondere aus der Fig. 2 ersichtlich ist, besitzen die
Werkzeugträger 6 im wesentlichen scheibenförmige, kreisrunde
Gestalt und sind entlang ihrer Peripherie mit nicht näher dargestellten Werkzeug-Tragorganen 8 versehen, die je ein Werkzeug 9 aufzunehmen bestimmt sind. Bei einer bevorzugten Ausführungsform können die Werkzeug-Tragorgane 8 die Gestalt von verriegelbaren Klemmgliedern besitzen, welche schwenkbare Schenkel zur Aufnahme der Werkzeuge 9 aufweisen. Die Einführungs- bzw. Entnahmeöffnung dieser Werkzeug-Tragorgane 8 erstreckt sich dabei im wesentlichen in radialer Richtung zu den scheibenförmigen Werkzeugträgern 6.

Bei dem hier erläuterten Ausführungsbeispiel können die Werkzeuge 9 Elektroden einer elektroerosiven Bearbeitungsvorrichtung sein. Da solche während des Betriebs in eine Flüssigkeit eingetaucht sind und somit nach der Entnahme aus der Bearbeitungsvorrichtung und dem Einsetzen in das Magazin 1 noch nass sein können, sind die Abtropfplatten 7 vorgesehen, um zu verhindern, dass im Magazin darunter untergebrachte Werkzeuge von dieser Flüssigkeit beaufschlagt und damit verschmutzt werden. Zu diesem Zweck besitzen die Abtropfplatten 7 ebenfalls scheibenförmige Gestalt und weisen einen Durchmesser auf, der im wesentlichen zumindest dem Durchmesser der scheibenförmigen Werkzeugträger 6 entspricht.

Der den Transportarm umfassende Teil 2 besitzt eine Säule 10, die sich im wesentlichen in vertikaler Richtung erstreckt und parallel zur Säule 3 verläuft, die die Werkzeugträger 6 aufnimmt. Auf der Säule 10 ist ein Schlitten 11 verschiebbar und höhenverstellbar gelagert. Dieser trägt einen um eine Achse 12 schwenkbar gelagerten Transportarm, der generell mit 13 bezeich-

0132599

net ist (Fig. 2). Der im wesentlichen L-förmige Arm 13 besitzt
einen Schenkel 14, der um die Achse 12 schwenkbar am Schlitten
11 aufgenommen ist, sowie einen Schenkel 15, der an seinem
freien Ende ein Greiforgan 16 trägt. Letzteres besitzt zangenartige Gestalt und weist zwei Backen 17 und 18 auf, die von
einer Freigabestellung, in der sie auseinandergespreizt sind,
in eine Schliesstellung betätigbar sind. Bei dem in Fig. 2
dargestellten Ausführungsbeispiel ist der Schenkel 15 des Armes
13 in Richtung des Pfeiles P 1 längsverschiebbar, so dass die
transversale Lage des Greiforganes 16 veränderlich ist.

Aus der Fig. 1 ist ersichtlich, dass einerseits die Werkzeugträger 6 in Richtung des Pfeiles P 2, d.h. in vertikaler Richtung verschiebbar sind; andererseits ist der Schlitten 11 in
Richtung des Pfeiles P 3 hinauf- und in Richtung des Pfeiles
P 4 hinabverschiebbar, und zwar entlang der Säule 10. Beim dargestellten Beispiel mit vier Werkzeugträgern 6 genügt es, sowohl
die Gesamtheit der Werkzeugträger als auch den Schlitten 11 zwischen zwei Endstellungen hin- und her zu verschieben, damit der
Arm 13 sämtliche in den Werkzeugträgern 6 abgelegten Werkzeuge 9
bzw. sämtliche Werkzeuglagerpositioen erreichen kann. Dadurch
ist erreicht, dass die drei eingangs erwähnten Bewegungen, nämlich die Auf- und Abbewegung des Schlittens, die Auf- und Abbewegung der Tragorgane und die Rotationsbewegung derselben, unabhängig voneinander gesteuert und optimiert werden können, um in
kürzest möglicher Zeit ein vorbestimmtes Werkzeug 9 bzw. einen
Werkzeugablageplatz innerhalb eines beliebigen Werkzeugträgers
6 an den vorbestimmten Ort zu bringen, der vom Greiforgan 16

0132599

des Armes 13 erreicht werden kann.

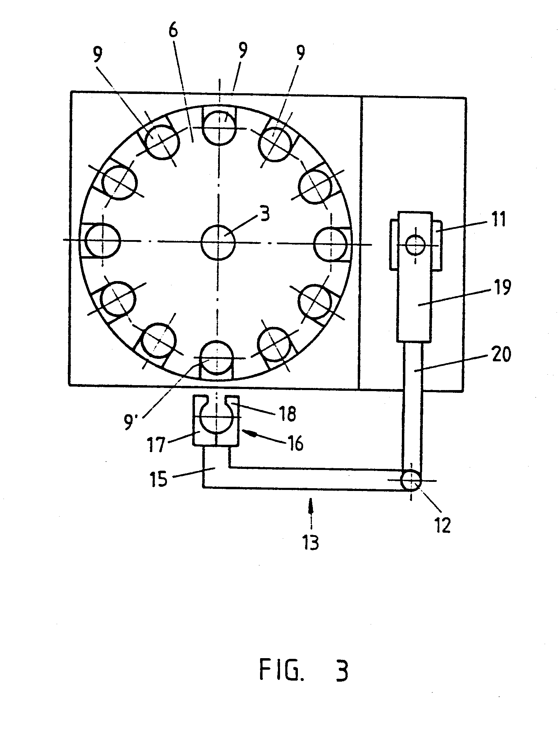

In den Figuren 3 - 7 ist ein Ausführungsbeispiel schematisch, jeweils in einer Ansicht von oben, in verschiedenen Bewegungsphasen dargestellt. Dieses Ausführungsbeispiel unterscheidet sich von demjenigen gemäss Fig. 1 und 2 lediglich dadurch, das der Schlitten 11 einen längsverstellbaren Fortsatz 19,20 trägt, an dessen Ende der Schwenklagerpunkt 12 des Armes 13 gelegen ist. Dafür ist der kürzere Schenkel des L-förmigen Armes 13, an dessen Ende das Greiforgan 16 angebracht ist, starr ausgebildet.

In der Position gemäss Fig. 3 ist die Einrichttung bereit, ein Werkzeug 9 zu ergreifen, nämlich das Werkzeug 9', welches zuvor in die geeignete Position gebracht worden ist. Dies ist, wie vorstehend erwähnt, dadurch geschehen, dass der ausgewählte, das zu ergreifende Werkzeug 9' tragende Werkzeugträger 6 einerseits in die geeignete Höhenlage gefahren und andererseits um die Säule 3 verschwenkt worden ist und andererseits, indem der Schlitten 11 mit daran angebrachtem Arm 13 in die korrespondierende Höhenlage verschoben wurde. Das Greiforgan 16 befindet sich mit seinen Backen 17 und 18 in Freigabestellung und ist bereit, das Werkzeug 9' zu erfassen.

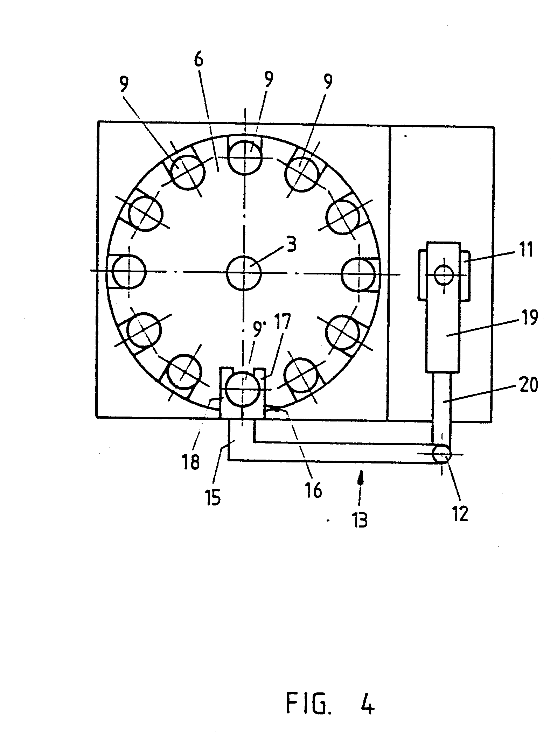

In der Position gemäss Fig. 4 wurde der längs verstellbare Fortsatz 19, 20 im Sinne einer Verkürzung betätigt, wobei der Arm 13 in seiner Schwenklage um die Achse 12 arretiert ist. Dadurch fährt das Greiforgan 16 zum zu ergreifenden Werkzeug 9' hin und umfasst dieses durch Betätigung der Backen 17 und 18 in die Schliesstellung.

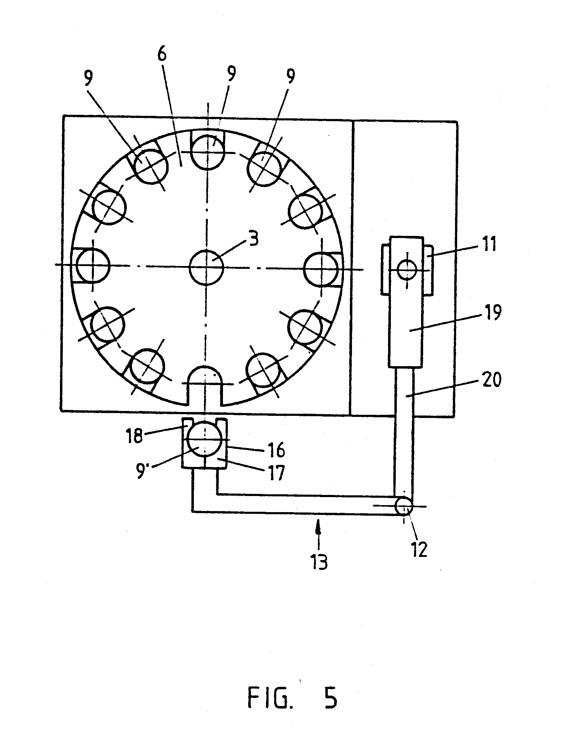

In der Position gemäs Fig. 5 hat das Greiforgan 16 das Werkzeug 9' aus dem Werkzeugträger 6 entnommen; die Backen 17 und 18 verbleiben weiter in Schließstellung und der Arm 13 ist weiter bezüglich seiner Schwenkachse 12 arretiert.

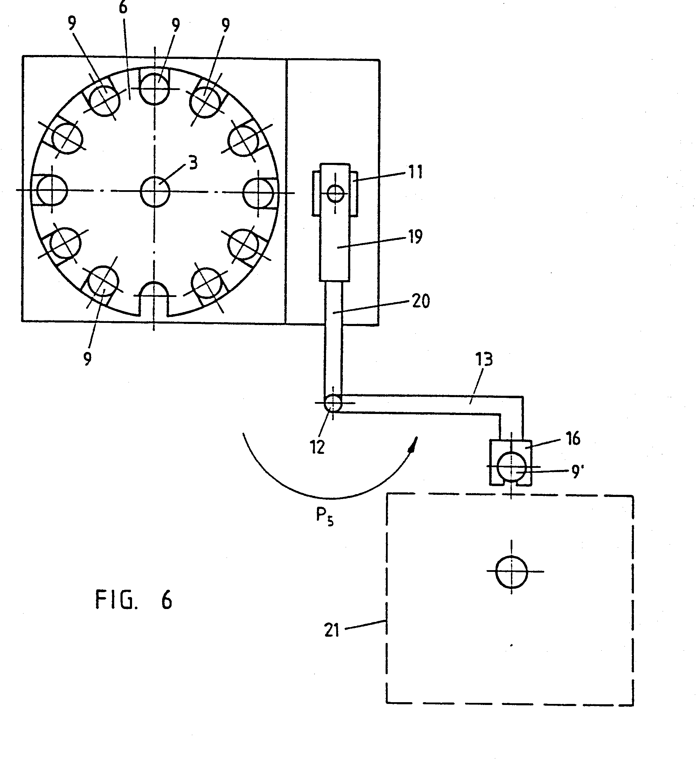

In der Position gemäss Fig. 6 wurde der Arm 13 in Richtung des Pfeiles P 5 um seine Schwenkachse 12 verschwenkt, und zwar um 180 grad, währenddem das Werkzeug 9' weiter durch das Greiforgan 16 festgehalten ist. Während dieser Schwenkbewegung des Arms 13 kann der Schlitten 11 gegebenfalls in seiner Höhenlage verstellt werden, um das Werkzeug 9' in die zum Einsetzen in die Bearbeitungsvorrichtung 21 geeignete Position zu bringen.

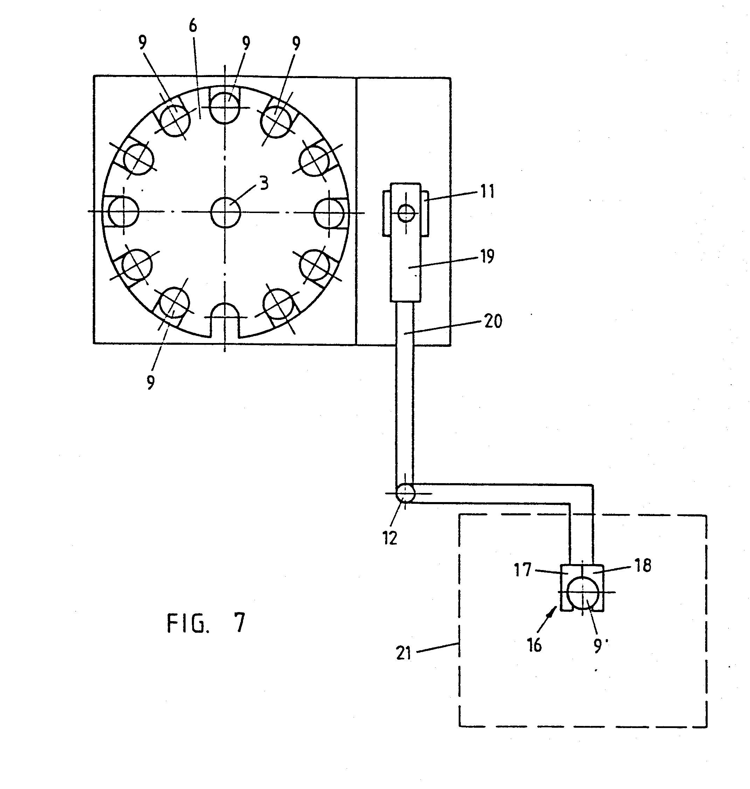

In der Position gemäss Fig. 7 schliesslich wurde der längsverstellbare Ausleger 19, 20 im Sinne einer Verlängerung betätigt, so dass das Werkzeug 9', welches nach wie vor vom Greifarm 16 festgehalten ist, an seine vorbestimmte Wirklage innerhalb der Bearbeitungsvorrichtung 21 verschoben wird. Muss das Werkzeug 9' durch vertikale Verschiebung z.B. auf eine Spindel der Bearbeitungsvorrichtung 21 aufgesetzt werden, kann dies auf einfache Weise durch Höhenverstellung des Schlittens 11 erfolgen.

Als nächstes wird der längsverstellbare Ausleger 19, 20 wieder eingezogen, nachdem die Backen 17 und 18 des Klemmorganes 16 gelöst worden sind, so dass die Bearbeitung eines Werkstückes innerhalb der Vorrichtung 21 mit Hilfe des Werkzeuges 9' er-

folgen kann. Wenn dieser Bearbeitungsvorgang, der den Einsatz
des Werkzeuges 9' erfordert, beendet ist, läuft der zuvor beschriebene Vorgang in umgekehrter Richtung ab, d.h. der Arm 13
wird wieder ausgefahren, ergreift das Werkzeug 9' mit dem Greiforgan 16, wird zurückgezogen, um die Achse 12 verschwenkt und
endlich wieder am zugeordneten Magazinplatz innerhalb des Werkzeugträgers 6 abgelegt. Für einen anschliessenden Bearbeitunsvorgang, der ein anderes Werzeug 9 erfordert, werden mit Hilfe
eines Steuerorganes der Schlitten 11 und/oder die Werkzeugträger
6 in der Höhe verstellt und /oder die Werkzeugträger 6 um die
Säule 3 verdreht, so dass der Arm 13 mittels des Greiforganes 16
das für den nächsten Bearbeitungsvorgang erforderliche Werkzeug
aus dem Magazin entnehmen kann. Der ganze Vorgang läuft dann
genau gleich ab, wie er am Beispiel des Werkeuges 9' beschrieben
worden ist.

P A T E N T A N S P R Ü C H E

----------------------------------

1. Werkzeugmagazin mit Werkzeug-Wechselvorrichtung zur Entnahme eines Werkzeugs (9) aus dem Magazin (1) und zum Transport des Werkzeugs (9) in eine Werkstück-Bearbeitungsvorrichtung (21) bzw. zur Entnahme des Werkzeugs (9) aus der Werkstück-Bearbeitungsvorrichung (21) und zum Transport des Werkzeugs (9) in das Magazin (1), insbesondere für den Wechsel von Elektroden an elektroerosiven Bearbeitungseinrichtungen, mit zumindest einem drehbaren, im wesentlichen scheibenförmigen Werkzeugträger (6) und einem schwenkbar gelagerten Transportarm (13) zur Entnahme der Werkzeuge (9) aus dem Werkzeugträger (6), dadurch gekennzeichnet, dass das Werkzeugmagazin (1) eine Mehrzahl von um eine erste Achse (3) drehbaren, im wesentlichen scheibenförmigen Werkzeugträgern (6) umfasst, entlang deren Peripherie eine Mehrzahl von WerkzeugAufnahmeorganen (8) angeordnet ist, und dass der Transportarm (13) im wesentlichen L-förmig ausgebildet und einerends um eine im Abstand von der ersten Drehachse (3) angeordnete, zweite Achse (10) schwenkbar gelagert ist und andernends ein Endstück (16) zum Ergreifen eines Werkzeugs (9) trägt, wobei das Endstück (16) des L-förmigen Transportarmes (13) in Bezug auf dessen Schwenkachse (12) transversal verschiebbar ist.

2. Werkzeugmagazin nach Anspruch 1 dadurch gekennzeichnet, dass die scheibenförmigen Werkzeugträger (6) im Abstand untereinander drehbar entlang einer sich im wesentlichen in vertikaler Richtung erstreckenden Welle (3) angeordnet sind.

3. Werkzeugmagazin nach Anspruch 1 oder 2, dadurch gekennzeichnet, dass unterhalb der scheibenförmigen Werkzeugträger (6) je eine im wesentlichen scheibenförmige Abtropfplatte (7) angeordnet ist, deren Durchmesser zumindest annähernd demjenigen der Werkzeugträger (6) entspricht.

4. Werkzeugmagazin nach einem der Ansprüche 1 - 3 dadurch gekennzeichnet, dass die Werkzeugträger (6) auf einer drehbar gelagerten Welle (3) befestigt sind, welche in Richtung ihrer Längsachse höhenverstellbar ist.

5. Werkzeugmagazin nach einem der Ansprüche 1 - 3, dadurch gekennzeichnet, dass die Werkzeugträger (6) entlang der drehbaren Welle (3) verschiebbar und in Bezug auf ihre Höhenlage verstellbar sind.

6. Werkzeugmagazin nach einem der vorangehenden Ansprüche, dadurch gekennzeichnet, dass die entlang der Peripherie der Werkzeugträger (6) angeordneten Werkzeug-Aufnahmeorgane (8) durch verriegelbare Klemmglieder gebildet sind, deren Entnahme- bzw. Aufnahmeöffnung sich bezüglich der ersten Drehachse (3) in radialer Richtung erstreckt.

7. Werkzeugmagazin nach einem der vorangehenden Ansprüche, dadurch gekennzeichnet, dass der L-förmige Transportarm (13) schwenkbar an einem Schlitten (11) gelagert ist, welcher entlang einer im Abstand zur Drehachse (3) des Magazins (1) angeordneten, sich im wesentlichen in vertikaler Richtung erstreckenden Säule (10) verschiebbar und höhenverstellbar gelagert ist.

8. Werkzeugmagazin nach Anspruch 7, dadurch gekennzeichnet, dass die Länge desjenigen Schenkels (14) des Transportarmes (13), der endseitig schwenkbar am Schlitten (11) gelagert ist, zumindest annähernd der Distanz zwischen der horizontalen Säule (10) und der die scheibenförmigen Werkzeugträger (6) aufnehmenden Welle (3) entspricht.

9. Werkzeugmagazin nach einem der vorangehenden Ansprüche, dadurch gekennzeichnet, dass der das Endstück (16) tragende Schenkel (15) des L-förmigen Transportarmes (13) teleskopartig ein- und ausfahrbar ausgebildet ist.

10. Werkzeugmagazin nach einem der vorangehenden Ansprüche, dadurch gekennzeichnet, dass das Endstück (16) als zangenförmiges Greiforgan ausgebildet ist, dessen Backen (17,18) zwischen einer auseinandergespreizten Freigabestellung und einer Klemmstellung betätigbar sind.

11. Werkzeugmagazin nach den Ansprüchen 5 und 7, dadurch gekennzeichnet, dass sowohl die scheibenförmigen Werkzeugträger (6) als auch der den Transportarm (13) tragende Schlitten (11) stufenweise um einen betragsmässig gleichen Verschiebungsweg höhenverstellbar sind.

0132599

7/6

FIG. 1

FIG. 2

FIG. 3

0132599

FIG. 4

FIG. 5

FIG. 6

FIG. 7

Europäisches
Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | FR-A-2 387 727 (INOUE-JAPAX) <br> * Seite 10, Zeile 21 - Seite 11, Zeile 11 * | 1 | B 23 H 7/26 <br> B 23 Q 3/157 |
| | --- | | |
| A | FR-A-2 391 809 (RATIER-FOREST) <br><br> * Seite 2, Zeile 37 - Seite 3, Zeile 38 * | 1,2,4, 5 | |
| | --- | | |
| A | US-A-3 990 140 (HOUDAILLE INDUSTRIES) <br> * Spalte 6, Zeilen 23-57 * | 6 | |
| | ----- | | |

| | RECHERCHIERTE SACHGEBIETE (Int Cl 4) |
|---|---|
| | B 23 H <br> B 23 Q |

Der vorliegende Recherchenbericht wurde für alle Patentansprüche erstellt.

| Recherchenort | Abschlußdatum der Recherche | Prüfer |
|---|---|---|
| DEN HAAG | 29-10-1984 | DAILLOUX C. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82